# EUROPÄISCHE PATENTSCHRIFT

(11) **EP 1 418 332 B1**
(45) Veröffentlichungstag und Bekanntmachung des Hinweises auf die Patenterteilung: **26.01.2011**
(21) Anmeldenummer: 03025313.2
(22) Anmeldetag: 03.11.2003
(51) Int. Cl.: F02M 21/02

(54) **Kraftstoffanlage für einen LPG-Motor**
Fuel system for a LPG engine
Système d'alimentation de carburant pour un moteur LPG

(30) Priorität: 08.11.2002 DE 10252084
(43) Veröffentlichungstag der Anmeldung: 12.05.2004
(73) Patentinhaber: STILL GmbH, 22113 Hamburg (DE); Volkswagen AG, 38436 Wolfsburg (DE)
(72) Erfinder: Avramopoulos, Iraklis, 14482 Berlin (DE); Firsching, Andreas, 63739 Aschaffenburg (DE); Kistner, Andreas, 63607 Wächtersbach (DE); Mey, Jörn, 23879 Mölln (DE); Seydell, Joachim, 38518 Gifhorn (DE); Wucherpfenning, Frank, 38302 Wolfenbüttel (DE)
(74) Vertreter: Geirhos, Johann

(56) Entgegenhaltungen:
- EP-A- 0 182 952
- WO-A-98/10186
- US-A- 5 443 053
- US-A- 6 044 825

## Beschreibung

Die Erfindung betrifft eine Kraftstoffanlage für einen mit Treibgas betriebenen Verbrennungsmotor, umfassend einen Verdampfer, in dem das in flüssigem Zustand gespeicherte Treibgas unter Wärmezufuhr in einen gasförmigen Zustand überführt wird, wobei der Verdampfer eine erste Heizvorrichtung für das Treibgas, mit welcher ein Teil der Abwärme des Verbrennungsmotors auf das in dem Verdampfer befindliche Treibgas übertragbar ist, eine zweite Heizvorrichtung, mit der das in dem Verdampfer befindliche Treibgas unabhängig von dem Zustand des Verbrennungsmotors beheizbar ist, aufweist sowie ein Ausgang des Verdampfers, durch den das Treibgas in gasförmigen Zustand aus dem Verdampfer austritt, mit einer an dem Verbrennungsmotor angeordneten Sammeleinspritzleitung verbunden ist.

Mit Treibgas angetriebene Verbrennungsmotoren werden häufig in Flurförderzeugen wie z.B. Gabelstaplern, aber auch in Personenkraftwagen eingesetzt. Das für diese Anwendung gebräuchliche Treibgas wird häufig auch als Flüssiggas oder als LPG (liquid petroleum gas) bezeichnet und besteht in der Hauptsache aus Propan und/oder Butan.

Die Kraftstoffanlage eines solchen Verbrennungsmotors umfasst einen Verdampfer, in dem das in flüssigem Zustand in einem Druckbehälter gespeicherte Treibgas in einen gasförmigen Zustand entspannt wird, wobei dem Treibgas Wärmeenergie zugeführt wird. Dies geschieht in der Regel mittels der Kühlflüssigkeit des Verbrennungsmotors, mit der beispielsweise ein Gehäuse des Verdampfers erwärmt wird. Der Verdampfer hat dabei auch die Funktion eines Druckreglers, so dass das Treibgas am Ausgang des Verdampfers in gasförmigem Zustand mit einem definierten Druck zur Verfügung steht. Weiterer, dem Verdampfer nachgeschalteter Bestandteil der Kraftstoffanlage ist entweder ein Mischer, der bezüglich seiner Funktion einem Vergaser eines Benzinmotors entspricht, oder eine Einspritzanlage.

Aus Sicherheitsgründen ist in jeder Betriebssituation zu gewährleisten, dass sich in den dem Verdampfer nachgeschalteten Teilen der Kraftstoffanlage ausschließlich gasförmiges Treibgas befindet. Eine gefährliche Betriebssituation ist hierbei insbesondere der Start des Verbrennungsmotors in kalter Umgebung, wenn gleichzeitig die Kühlflüssigkeit des Verbrennungsmotors noch nicht erwärmt ist. Wenn sich in einer solchen Betriebssituation flüssiges Treibgas in der Einspritzanlage und den zu ihr führenden Leitungen ansammelt, führt das zunächst zu einem Überfetten des Verbrennungsmotors, der daraufhin nicht startet. In der Folge sammelt sich zusätzliches flüssiges Treibgas hinter dem Verdampfer an, was schließlich ein erhebliches Sicherheitsproblem darstellt.

Aus der EP 0 182 952 A1 eine Regelvorrichtung bekannt, in der LPG verdampft und gleichmäßig einem Verbrennungsmotor zugeführt wird. Dabei sind eine erste durch Motorkühlwasser beheizte Rohrschlange und ein durch eine Unterdruckregelung angesteuertes Übergangsventil in einen zweiten Raum offenbart, in dem ein PCT-Heizelement derart an der Wand angeordnet ist, dass nicht nur der zweite Raum, sondern über die Wand auch das Motorkühlwasser beheizt wird.

Aus der WO 98/10186 A1 ist eine Beheizung von Einspritzleitungen für im Normalbetrieb flüssiges LPG im Bereich von Einspritzventilen bekannt, die nach dem Abstellen des Motors in der Einspritzanlage befindliches flüssiges LPG verdampfen kann und durch den Überdruck die Einspritzleitung entleeren kann, indem dieses Gas in den Tank zurückgedrückt wird.

Weitere gattungsgemäße Kraftstoffanlagen sind aus der US 6,044,825 A und der US 5,443,053 A bekannt.

Der Erfindung liegt daher die Aufgabe zugrunde, eine Kraftstoffanlage für einen Treibgasmotor zur Verfügung zu stellen, die ein Ansammeln von flüssigem Treibgas hinter dem Verdampfer sicher verhindert.

Diese Aufgabe wird erfindungsgemäß dadurch gelöst, dass eine dritte Heizvorrichtung vorgesehen ist, die an der Sammeleinspritzleitung angeordnet ist. Ein Ausgang des Verdampfers, durch den das Treibgas in gasförmigen Zustand aus dem Verdampfer austritt, ist mit einer an dem Verbrennungsmotor angeordneten Sammeleinspritzleitung verbunden. Eine derartige Sammeleinspritzleitung, die häufig auch als "Rail" bezeichnet wird, ist in geringem Abstand, parallel zu dem Zylinderkopf des Verbrennungsmotors angeordnet. Ähnliche Kraftstoff-Einspritzsysteme sind im Motorenbau insbesondere für Dieselmotoren bekannt. Eine Rückkondensation des Treibgases in der Sammeleinspritzleitung kann sicher verhindert werden, indem eine dritte Heizvorrichtung vorgesehen ist, die an der Sammeleinspritzleitung angeordnet ist. Die dritte Heizvorrichtung erwärmt die Wände der Sammeleinspritzleitung und verhindert eine Kondensation des Treibgases, auch bei kaltem Verbrennungsmotor und bei kalter Umgebungstemperatur. Die zweite Heizvorrichtung stellt unabhängig von der Umgebungstemperatur und damit unabhängig von der Temperatur des flüssigen Treibgases sicher, dass auch bei kaltem Verbrennungsmotor das den Verdampfer durchströmende Treibgas vollständig in seine gasförmige Phase übergeführt wird.

Bevorzugt weist die zweite Heizvorrichtung ein elektrisches Heizelement auf. Das elektrische Heizelement wird dabei von der Starterbatterie des Verbrennungsmotors mit Strom versorgt.

Mit besonderem Vorteil ist das elektrische Heizelement der zweiten Heizvorrichtung als PTC-Heizelement ausgeführt. PTC-Heizelemente besitzen einen bei ansteigender Temperatur ebenfalls ansteigenden inneren elektrischen Widerstand, so dass die Heizleistung des PTC-Heizelements bei steigender Temperatur abnimmt. Der angestrebte Temperatur-Sollwert kann damit durch geeignete Auswahl des PTC-Heizelements voreingestellt werden, so dass auf eine getrennte Regelvorrichtung für die Heizvorrichtung verzichtet werden kann.

Eine übliche Bauform des Verdampfers liegt vor, wenn der Verdampfer eine erste und eine zweite Verdampferkammer aufweist, die mittels eines Ventils miteinander verbunden sind. Das Verdampfen des Treibgases erfolgt damit in den beiden Verdampferkammem in zwei Stufen.

Eine besonders günstige Bauform liegt vor, wenn die erste Heizvorrichtung innerhalb des Verdampfers angeordnet ist. Hierbei befindet sich beispielsweise ein mit Kühlflüssigkeit des Verbrennungsmotors durchströmter Wärmetauscher innerhalb eines Gehäuses des Verdampfers.

Vorzugsweise ist die erste Heizvorrichtung derart angeordnet, dass das in der ersten und das in der zweiten Verdampferkammer befindliche Treibgas mittels der ersten Heizvorrichtung beheizbar ist.

Auch die zweite Heizvorrichtung ist innerhalb des Verdampfers angeordnet. Das Gehäuse der zweiten Heizvorrichtung befindet sich dabei ebenfalls innerhalb des Gehäuses des Verdampfers.

Hierbei ist die zweite Heizvorrichtung ebenfalls derart angeordnet, dass das in der ersten und das in der zweiten Verdampferkammer befindliche Treibgas mittels der zweiten Heizvorrichtung beheizbar ist.

Darüber hinaus ist die zweite Heizvorrichtung derart angeordnet, dass ein in der ersten Heizvorrichtung befindliches flüssiges Medium mittels der zweiten Heizvorrichtung beheizbar ist. Das Beheizen des in den Verdampferkammem befindlichen Treibgases mittels der zweiten Heizvorrichtung erfolgt damit sowohl direkt, als auch indirekt über das flüssige Medium und das Gehäuse der ersten Heizvorrichtung.

Auf eine gesonderte Trennwand kann verzichtet werden, wenn die zweite Heizvorrichtung eine Abtrennung zwischen der ersten Verdampferkammer und der zweiten Verdampferkammer darstellt. Die zweite Heizvorrichtung weist hierbei eine flächige Form auf und ist gegenüber den anschließenden Gehäuseteilen des Verdampfers abgedichtet.

Im Bereich eines Eingangs des Verdampfers, durch den das Treibgas in flüssigem Zustand in den Verdampfer eintritt, ist ein vorzugsweise magnetisch ansteuerbares Absperrventil angeordnet. Das Absperrventil wird von einer Steuerung geschaltet und dient dazu, ein unerwünschtes Eintreten von Treibgas in den Verdampfer zu verhindern.

Auch die dritte Heizvorrichtung weist ein elektrisches Heizelement auf und kann damit unabhängig von dem Zustand des Verbrennungsmotors betrieben werden.

Das elektrische Heizelement der dritten Heizvorrichtung ist mit den oben beschriebenen Vorteilen ebenfalls als PTC-Heizelement ausgeführt.

Weitere Vorteile und Einzelheiten der Erfindung werden anhand des in der schematischen Figur dargestellten Ausführungsbeispiels näher erläutert.

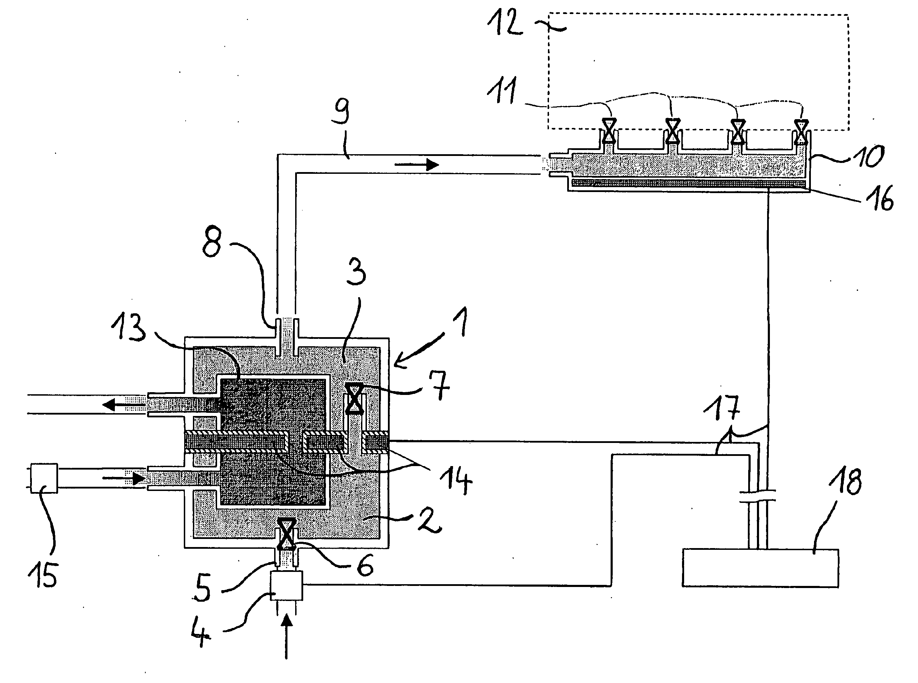

Die Figur zeigt eine erfindungsgemäße Kraftstoffanlage für einen mit Flüssiggas (LPG) betriebenen Verbrennungsmotor. Ein Verdampfer 1 weist eine erste Verdampferkammer 2 und eine zweite Verdampferkammer 3 auf. Ein nicht dargestellter Druckbehälter für das Treibgas ist über ein Absperrventil 4 an einen Eingang 5 des Verdampfers 1 angeschlossen. Im Bereich des Eingangs 5 befindet sich ein erstes Ventil 6, an der das Treibgas entspannt wird und dabei zumindest teilweise die gasförmige Phase übergeht. Über ein zweites Ventil 7 gelangt das Treibgas in die zweite Verdampferkammer 3, und geht dabei vollständig in die gasförmige Phase über. Ein an der zweiten Verdampferkammer 3 angeordneter Ausgang 8 verbindet den Verdampfer 1 über eine Leitung 9 mit einer Sammeleinspritzleitung 10. An der Sammeleinspritzleitung 10 sind Ventile 11 angeordnet, über welche das Treibgas direkt oder indirekt über einen Luftansaugkanal in die Brennräume eines Verbrennungsmotors 12 eingespritzt wird.

Während des Verdampfens nimmt das Treibgas aus seiner Umgebung Wärmeenergie auf, die dem Verdampfer 1 mittels einer ersten Heizvorrichtung 13 und einer zweiten Heizvorrichtung 14 zugeführt wird. Die erste Heizvorrichtung 13 ist an einen Kühlkreislauf des Verbrennungsmotors 12 gekoppelt. Der innerhalb des Verdampfers angeordnete Wärmetauscher der ersten Heizvorrichtung 13 erstreckt sich auf beide Verdampferkammem 2, 3 und wird mit der Kühlflüssigkeit des Verbrennungsmotors 12 durchströmt. Ein optionales Thermostatventil 15 regelt den Kühlflüssigkeitsstrom in Abhängigkeit von der Temperatur der Kühlflüssigkeit derart, dass die erste Heizvorrichtung 13 nur dann mit Kühlflüssigkeit durchströmt wird, wenn deren Temperatur einen bestimmten Grenzwert überschreitet. Die zweite Heizvorrichtung 14 wird mit elektrischer Energie beheizt, kann also unabhängig von dem Zustand des Verbrennungsmotors 12 betrieben werden. Die zweite Heizvorrichtung 14 ist derart angeordnet, dass sie die Abtrennung zwischen der ersten Verdampferkammer 2 und der zweiten Verdampferkammer 3 bildet und erstreckt sich auch auf das Innere des Wärmetauschers der ersten Heizvorrichtung 13, so dass Wärmeenergie von der zweiten Heizvorrichtung 14 direkt und indirekt über die erste Heizvorrichtung 13 auf das in den Verdampferkammem 2, 3 befindliche Treibgas übertragen wird. Von der zweiten Heizvorrichtung 14 wird Wärme mittels eines PTC-Heizelements erzeugt, dessen Temperatur sich selbständig auf einen voreingestellten Wert regelt. Eine dritte Heizvorrichtung 16 dient zum Erwärmen der Sammeleinspritzleitung 10 und ist ebenfalls mit einem PTC-Heizelement ausgerüstet.

Mit der zweiten, elektrisch betriebenen Heizvorrichtung wird sichergestellt, dass das Treibgas auch bei kalter Umgebungstemperatur und bei kaltem Verbrennungsmotor im Verdampfer 1 vollständig verdampft. Hierdurch kann sicher verhindert werden, dass unsichere Betriebszustände dadurch entstehen, dass flüssiges Treibgas in die Leitung 9 und in die Sammeleinspritzleitung 10 gelangt. Die dritte Heizvorrichtung 16 verhindert eine Rückkondensation des gasförmigen Treibgases an sonst möglicherweise kalten Wänden der Sammeleinspritzleitung 10.

Um die Betriebssicherheit des Verbrennungsmotors jederzeit gewährleisten zu können, wird die korrekte Funktion des Absperrventils 4 sowie der zweiten und der dritten Heizvorrichtung 14, 16 fortlaufend über Signalleitungen 17 mittels einer elektronischen Überwachungseinheit 18 überwacht.

## Patentansprüche

1. Kraftstoffanlage für einen mit Treibgas betriebenen Verbrennungsmotor (12), umfassend einen Verdampfer (1), in dem das in flüssigem Zustand gespeicherte Treibgas unter Wärmezufuhr in einen gasförmigen Zustand überführt wird, wobei der Verdampfer (1) eine erste Heizvorrichtung (13) für das Treibgas aufweist, mit welcher ein Teil der Abwärme des Verbrennungsmotors (12) auf das in dem Verdampfer (1) befindliche Treibgas übertragbar ist, und der Verdampfer (1) eine zweite Heizvorrichtung (14) aufweist, mit dem das in dem Verdampfer (1) befindliche Treibgas unabhängig von dem Zustand des Verbrennungsmotors (12) beheizbar ist, sowie ein Ausgang (4) des Verdampfers (1), durch den das Treibgas in gasförmigen Zustand aus dem Verdampfer (1) austritt, mit einer an dem Verbrennungsmotor (12) angeordneten Sammeleinspritzleitung (10) verbunden ist,
**dadurch gekennzeichnet,**
**dass** eine dritte Heizvorrichtung (16) vorgesehen ist, die an der Sammeleinspritzleitung (10) angeordnet ist

2. Kraftstoffanlage nach Anspruch 1, **dadurch gekennzeichnet, dass** die zweite Heizvorrichtung (14) ein elektrisches Heizelement aufweist.

3. Kraftstoffanlage nach Anspruch 2, **dadurch gekennzeichnet, dass** das elektrische Heizelement der zweiten Heizvorrichtung (14) als PTC-Heizelement ausgeführt ist.

4. Kraftstoffanlage nach einem der Ansprüche 1 bis 3, **dadurch gekennzeichnet, dass** der Verdampfer (1) eine erste Verdampferkammer (2) und eine zweite Verdampferkammer (3) aufweist, die mittels eines Ventils (7) miteinander verbunden sind.

5. Kraftstoffanlage nach einem der Ansprüche 1 bis 4, **dadurch gekennzeichnet, dass** die erste Heizvorrichtung (13) innerhalb des Verdampfers (1) angeordnet ist.

6. Kraftstoffanlage nach Anspruch 4 oder 5, **dadurch gekennzeichnet, dass** die erste Heizvorrichtung (13) derart angeordnet ist, dass das in der ersten und das in der zweiten Verdampferkammer (2, 3) befindliche Treibgas mittels der ersten Heizvorrichtung (13) beheizbar ist.

7. Kraftstoffanlage nach einem der Ansprüche 1 bis 6, **dadurch gekennzeichnet, dass** die zweite Heizvorrichtung (14) innerhalb des Verdampfers (1) angeordnet ist.

8. Kraftstoffanlage nach einem der Ansprüche 4 bis 7, **dadurch gekennzeichnet, dass** die zweite Heizvorrichtung (14) derart angeordnet ist, dass das in der ersten und das in der zweiten Verdampferkammer (2, 3) befindliche Treibgas mittels der zweiten Heizvorrichtung (14) beheizbar ist.

9. Kraftstoffanlage nach einem der Ansprüche 1 bis 8, **dadurch gekennzeichnet, dass** die zweite Heizvorrichtung (14) derart angeordnet ist, dass ein in der ersten Heizvorrichtung (13) befindliches flüssiges Medium mittels der zweiten Heizvorrichtung (14) beheizbar ist.

10. Kraftstoffanlage nach einem der Ansprüche 4 bis 9, **dadurch gekennzeichnet, dass** die zweite Heizvorrichtung (14) eine Abtrennung zwischen der ersten Verdampferkammer (2) und der zweiten Verdampferkammer (3) darstellt.

11. Kraftstoffanlage nach einem der Ansprüche 1 bis 10, **dadurch gekennzeichnet, dass** im Bereich eines Eingangs (5) des Verdampfers (1), durch den das Treibgas in flüssigem Zustand in den Verdampfer (1) eintritt, ein vorzugsweise magnetisch ansteuerbares Absperrventil (4) angeordnet ist.

12. Kraftstoffanlage nach einem der Ansprüche 1 bis 11, **dadurch gekennzeichnet, dass** die dritte Heizvorrichtung (16) ein elektrisches Heizelement aufweist

13. Kraftstoffanlage nach Anspruch 12, **dadurch gekennzeichnet, dass** das elektrische Heizelement der dritten Heizvorrichtung (16) als PTC-Heizelement ausgeführt ist.

## Claims

1. Fuel system for an internal combustion engine (12) operated with power gas, comprising an evaporator (1) in which the power gas, which is stored in the liquid state, is changed into a gaseous state by means of a supply of heat, with the evaporator (1) having a first heating device (13) for the power gas, by means of which first heating device (13) a part of the waste heat of the internal combustion engine (12) can be transferred to the power gas situated in the evaporator (1), and with the evaporator (1) having a second heating device (14) by means of which the power gas situated in the evaporator (1) can be heated independently of the state of the internal combustion engine (12), and with an outlet (4) of the evaporator (1) through which the power gas emerges out of the evaporator (1) in the gaseous state being connected to a collecting injection line (10) which is arranged on the internal combustion engine (12),
**characterized**
**in that** a third heating device (16) is provided which is arranged on the collecting injection line (10).

2. Fuel system according to Claim 1, **characterized in that** the second heating device (14) has an electric heating element.

3. Fuel system according to Claim 2, **characterized in that** the electric heating element of the second heating device (14) is designed as a PTC heating element.

4. Fuel system according to one of Claims 1 to 3, **characterized in that** the evaporator (1) has a first evaporator chamber (2) and a second evaporator chamber (3) which are connected to one another by means of a valve (7).

5. Fuel system according to one of Claims 1 to 4, **characterized in that** the first heating device (13) is arranged within the evaporator (1).

6. Fuel system according to Claim 4 or 5, **characterized in that** the first heating device (13) is arranged such that the power gas situated in the first evaporator chamber (2) and the power gas situated in the second evaporator chamber (3) can be heated by means of the first heating device (13).

7. Fuel system according to one of Claims 1 to 6, **characterized in that** the second heating device (14) is arranged within the evaporator (1).

8. Fuel system according to one of Claims 4 to 7, **characterized in that** the second heating device (14) is arranged such that the power gas situated in the first evaporator chamber (2) and the power gas situated in the second evaporator chamber (3) can be heated by means of the second heating device (14).

9. Fuel system according to one of Claims 1 to 8, **characterized in that** the second heating device (14) is arranged such that a liquid medium situated in the first heating device (13) can be heated by means of the second heating device (14).

10. Fuel system according to one of Claims 4 to 9, **characterized in that** the second heating device (14) forms a partition between the first evaporator chamber (2) and the second evaporator chamber (3).

11. Fuel system according to one of Claims 1 to 10, **characterized in that** a preferably magnetically actuable shut-off valve (4) is arranged in the region of an inlet (5) of the evaporator (1), through which inlet the power gas enters into the evaporator (1) in the liquid state.

12. Fuel system according to one of Claims 1 to 11, **characterized in that** the third heating device (16) has an electric heating element.

13. Fuel system according to Claim 12, **characterized in that** the electric heating element of the third heating device (16) is designed as a PTC heating element.

## Revendications

1. Installation de carburant pour un moteur à combustion interne (12) alimenté avec du gaz propulseur, comprenant un évaporateur (1), dans lequel le gaz propulseur accumulé à l'état liquide est converti en un état gazeux par apport de chaleur, l'évaporateur (1) présentant un premier dispositif de chauffage (13) pour le gaz propulseur, avec lequel une partie de la chaleur perdue du moteur à combustion interne (12) peut être transmise au gaz propulseur se trouvant dans l'évaporateur (1) et l'évaporateur (1) présentant un deuxième dispositif de chauffage (14) avec lequel le gaz propulseur se trouvant dans l'évaporateur (1) peut être chauffé indépendamment de l'état du moteur à combustion interne (12), et une sortie (4) de l'évaporateur (1) à travers laquelle le gaz propulseur sort à l'état gazeux hors de l'évaporateur (1), étant connectée à une conduite d'injection de collecte (10) disposée au niveau du moteur à combustion interne (12),
**caractérisée en ce**
**qu'**il est prévu un troisième dispositif de chauffage (16) qui est disposé au niveau de la conduite d'injection de collecte (10).

2. Installation de carburant selon la revendication 1, **caractérisée en ce que** le deuxième dispositif de chauffage (14) présente un élément chauffant électrique.

3. Installation de carburant selon la revendication 2, **caractérisée en ce que** l'élément chauffant électrique du deuxième dispositif de chauffage (14) est réalisé sous forme d'élément chauffant CTP.

4. Installation de carburant selon l'une quelconque des revendications 1 à 3, **caractérisée en ce que** l'évaporateur (1) présente une première chambre d'évaporateur (2) et une deuxième chambre d'évaporateur (3) qui sont connectées l'une à l'autre au moyen d'une soupape (7).

5. Installation de carburant selon l'une quelconque des revendications 1 à 4, **caractérisée en ce que** le premier dispositif de chauffage (13) est disposé à l'intérieur de l'évaporateur (1).

6. Installation de carburant selon la revendication 4 ou 5, **caractérisée en ce que** le premier dispositif de chauffage (13) est disposé de telle sorte que le gaz propulseur se trouvant dans la première et dans la deuxième chambre d'évaporateur (2, 3) puisse être chauffé au moyen du premier dispositif de chauffage (13).

7. Installation de carburant selon l'une quelconque des revendications 1 à 6, **caractérisée en ce que** le deuxième dispositif de chauffage (14) est disposé à l'intérieur de l'évaporateur (1).

8. Installation de carburant selon l'une quelconque des revendications 4 à 7, **caractérisée en ce que** le deuxième dispositif de chauffage (14) est disposé de telle sorte que le gaz propulseur se trouvant dans la première et dans la deuxième chambre d'évaporateur (2, 3) puisse être chauffé au moyen du deuxième dispositif de chauffage (14).

9. Installation de carburant selon l'une quelconque des revendications 1 à 8, **caractérisée en ce que** le deuxième dispositif de chauffage (14) est disposé de telle sorte qu'un milieu fluide se trouvant dans le premier dispositif de chauffage (13) puisse être chauffé au moyen du deuxième dispositif de chauffage (14).

10. Installation de carburant selon l'une quelconque des revendications 4 à 9, **caractérisée en ce que** le deuxième dispositif de chauffage (14) constitue une séparation entre la première chambre d'évaporateur (2) et la deuxième chambre d'évaporateur (3).

11. Installation de carburant selon l'une quelconque des revendications 1 à 10, **caractérisée en ce que** dans la région d'une entrée (5) de l'évaporateur (1), à travers laquelle le gaz propulseur à l'état liquide entre dans l'évaporateur (1), est disposée une soupape de non-retour (4) de préférence à commande magnétique.

12. Installation de carburant selon l'une quelconque des revendications 1 à 11, **caractérisée en ce que** le troisième dispositif de chauffage (16) présente un élément chauffant électrique.

13. Installation de carburant selon la revendication 12, **caractérisée en ce que** l'élément chauffant électrique du troisième dispositif de chauffage (16) est réalisé sous forme d'élément chauffant CTP.
